(19) Europäisches Patentamt
European Patent Office
Office européen des brevets

(11) EP 4 700 915 A2

(12) **EUROPEAN PATENT APPLICATION**

(43) Date of publication:
**25.02.2026 Bulletin 2026/09**

(21) Application number: **25197212.1**

(22) Date of filing: **21.08.2025**

(51) International Patent Classification (IPC):
***H01M 10/653*** (2014.01) ***H01M 10/658*** (2014.01)
***H01M 50/24*** (2021.01) ***H01M 50/507*** (2021.01)
*H01M 50/209* (2021.01)

(52) Cooperative Patent Classification (CPC):
**H01M 10/658; H01M 10/653; H01M 50/24; H01M 50/507;** H01M 50/209

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.08.2024 KR 20240111919**
**18.11.2024 KR 20240164340**

(71) Applicant: **SK On Co., Ltd.**
**Seoul 03161 (KR)**

(72) Inventors:
- **SON, Jin Woo**
  **34124 Daejeon (KR)**
- **KIM, Su A**
  **34124 Daejeon (KR)**
- **JANG, Jeong Beom**
  **34124 Daejeon (KR)**
- **LEE, Tae Gu**
  **34124 Daejeon (KR)**

(74) Representative: **Prüfer & Partner mbB**
**Patentanwälte · Rechtsanwälte**
**Sohnckestraße 12**
**81479 München (DE)**

# (54) BATTERY ASSEMBLY

(57) The embodiments of the present disclosure relate to a battery assembly, and a battery assembly comprising a plurality of battery cells, a receiving case configured to accommodate the plurality of the battery cells, an insertion space formed inside the receiving case, and an insulating filler disposed in the insertion space, wherein the insulating filler has hydrophobicity.

FIG. 1

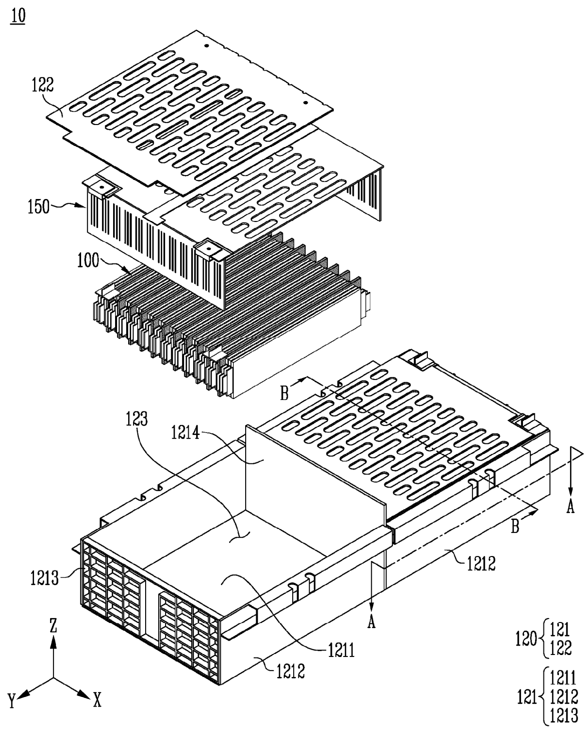


EP 4 700 915 A2

## Description

BACKGROUND

1. Field

The embodiments of the present disclosure relate to a battery assembly.

2. Description of the Related Art

A secondary battery is a battery configured to convert electrical energy into chemical energy for storage, allowing it to be recharged and reused multiple times through charging and discharging cycles. To achieve a desired output and performance, a plurality of secondary batteries may be grouped together and assembled into a battery assembly. Such a battery assembly may include a plurality of secondary batteries, i.e., a plurality of battery cells, housed within an internal receiving space as described.

When a thermal runaway event occurs in any of the plurality of the battery cells which are accommodated in the battery assembly, the heat or flame generated from the affected cell can easily propagate to adjacent cells. In such cases, due to the characteristics of secondary batteries, this may cause critical safety issues.

In the battery assembly, there may exist empty spaces around to the battery cells. When a thermal runaway event occurs, heat or flame may transfer to adjacent cells through the empty spaces, potentially exacerbating the damage.

To prevent such risks, approaches involving the filling of empty spaces with flame-retardant, insulating fillers, or both have been attempted. However, issues have been reported where the filler absorbs moisture in humid environments, leading to the breakdown of electrical insulation. Therefore, there is a need to seek solutions to address this problem.

SUMMARY

According to an embodiment of the present disclosure, a battery assembly can be provided that fills empty spaces within the battery assembly to achieve thermal and electrical insulation, while simultaneously preventing electrical insulation failure caused by moisture absorption during thermal runaway events or under normal usage conditions.

According to another embodiment of the present disclosure, a battery assembly with improved safety and stability can be provided.

The embodiments of the present disclosure can be widely applied in the fields of green technology, such as electric vehicles (EVs), battery charging stations, energy storage systems (ESS), and other battery-based applications including photovoltaics and wind power. Furthermore, the embodiments of the present disclosure can also be used in eco-friendly mobility solutions, including electric and hybrid vehicles, which aim to suppress air pollution and greenhouse gas emissions and thereby help prevent climate change.

According to the embodiments of the present disclosure, a battery assembly may comprise a plurality of battery cells; a receiving case configured to accommodate the plurality of the battery cells; an insertion space formed inside the receiving case; and an insulating filler disposed in the insertion space, the insulating filler may have hydrophobicity.

In a battery assembly according to an embodiment, the insulating filler may have an octanol-water partition coefficient ($LogP_{ow}$) greater than 0.

In a battery assembly according to an embodiment, the water contact angle of the insulating filler may be greater than 60°.

In a battery assembly according to an embodiment, the surface energy of the insulating filler may be 72 mN/m or less.

In a battery assembly according to an embodiment, the surface energy of the insulating filler may be 30 mN/m or less.

In a battery assembly according to an embodiment, the insulating filler may have a water absorption of 2% or less.

In a battery assembly according to an embodiment, the insulating filler may have a thermal conductivity of 0.1 W/m·K or less.

In a battery assembly according to an embodiment, the insulating filler may have a volume resistivity of 2000 Ω·m or more.

In a battery assembly according to an embodiment, the insulating filler may include a polymer selected from the group consisting of a polysiloxane-based polymer, a polyethylene-based polymer, a polypropylene-based polymer, a polytetrafluoroethylene-based polymer, and a polystyrene-based polymer; or a copolymer comprising two or more of the polymers selected from the group.

In a battery assembly according to an embodiment, the insulating filler may be in the form of a foam.

In a battery assembly according to an embodiment, the battery assembly may further comprise a busbar

assembly including a busbar electrically connected to the plurality of the battery cells and a busbar frame supporting the busbar, and the insertion space may be located in at least one of a space between the plurality of the battery cells and the busbar assembly; and a space between the receiving case and the busbar assembly.

In a battery assembly according to an embodiment, each of the plurality of the battery cells may include an electrode assembly, a cell case accommodating the electrode assembly therein, and a lead tab portion electrically connected to the electrode assembly and protruding outward from the cell case; and the busbar assembly may include a pair of side portions extending along a stacking direction of the plurality of the battery cells, and a base portion connecting the pair of side portions; and the insertion space may be located in at least one of a space between the plurality of the battery cells and the pair of side portions, a space between the plurality of the battery cells and the base portion, and a space between the receiving case and the pair of side portions.

In a battery assembly according to an embodiment, the insertion space may include a first insertion space formed between the plurality of the battery cells and the pair of side portions.

In a battery assembly according to an embodiment, the insertion space may include a second insertion space formed between the receiving case and the pair of side portions.

In a battery assembly according to an embodiment, the insertion space may include a third insertion space formed between the plurality of the battery cells and the base portion.

In a battery assembly according to an embodiment, the insulating filler may be provided in a foam-filled form in the insertion space to fill at least part of the total volume of the insertion space.

In a battery assembly according to an embodiment, the insulating filler may be injected into the insertion space in the form of a liquid precursor and foamed in the insertion space during or after injection.

In a battery assembly according to an embodiment, the insulating filler may fill 90% or more of the total volume of the insertion space.

In a battery assembly according to an embodiment, the insulating filler may be provided in a preformed foam form and inserted into the insertion space to fill the insertion space.

According to the embodiments of the present disclosure, a battery assembly may comprise a receiving case configured to accommodate a plurality of battery cells; the plurality of battery cells disposed within the receiving case; a busbar assembly including a busbar electrically connected to the plurality of battery cells; an insulating filler disposed within the receiving case between the plurality of battery cells, the receiving case and the busbar, wherein the insulating filler is a polysiloxane-based polymer, a polyethylene-based polymer, a polypropylene-based polymer, a polytetrafluoroethylene-based polymer, a polystyrene-based polymer; or any combination thereof.

According to an embodiment of the present disclosure, a battery assembly is provided that can fill empty spaces within the battery assembly to achieve thermal and electrical insulation, while also preventing electrical insulation failure caused by moisture absorption under thermal runaway conditions or in daily use environments.

According to another embodiment of the present disclosure, a battery assembly with improved safety and stability can be provided.

Moreover, the embodiments of the present disclosure can be widely applied in the field of green technology, including electric vehicles (EVs), battery charging stations, energy storage systems (ESS), and other battery-based applications such as photovoltaics and wind power. In addition, the embodiments of the present disclosure can be used in eco-friendly mobility solutions, including electric and hybrid vehicles, which aim to reduce air pollution and greenhouse gas emissions and thereby contribute to the prevention of climate change.

## BRIEF DESCRIPTION OF THE DRAWINGS

FIG. 1 is a view illustrating a battery assembly according to an embodiment of the present disclosure, in a state where an insulating filler is not included.

FIG. 2 is a view illustrating a cross-section in region A of the battery assembly shown in FIG. 1.

FIG. 3 is a view illustrating a cross-section in region B of the battery assembly shown in FIG. 1.

FIG. 4 is a view illustrating an enlarged region A1 of the battery assembly shown in FIG. 2, in which an insulating filler is disposed.

FIG. 5 is a view illustrating another enlarged region A1 of the battery assembly shown in FIG. 2, in which an insulating filler is disposed.

FIG. 6 is a view illustrating an enlarged region B1 of the battery assembly shown in FIG. 3, in which an insulating filler is disposed.

FIG. 7 is a view illustrating yet another enlarged region A1 of the battery assembly shown in FIG. 2, in which an insulating filler is disposed.

FIG. 8 is a view illustrating another enlarged region B1 of the battery assembly shown in FIG. 3, in which an insulating

filler is disposed.

FIG. 9 is a view illustrating yet another enlarged region B1 of the battery assembly shown in FIG. 3, in which an insulating filler is disposed.

FIG. 10 is a view illustrating the arrangement relationship among components constituting a battery module used in an embodiment of the present disclosure.

FIG. 11 is a graph showing the voltage drop over time of the battery modules in an embodiment and comparative example under simulated thermal runaway conditions.

## DETAILED DESCRIPTION

The embodiments described in the present disclosure may be modified in various ways, and the technology according to an embodiment is not limited to the embodiments described below. Furthermore, throughout this disclosure, expressions such as "comprise," "include," "contain," or "have" with respect to any components are not intended to exclude the presence of other components unless explicitly stated otherwise, and may include additional elements, materials, or processes not specifically enumerated.

In the present disclosure, the use of terms such as "first," "second," and "third" before components is for the purpose of distinguishing between elements and does not imply any particular order, importance, or hierarchical relationship. For example, an embodiment may be implemented including only a second component without a first component.

In the present disclosure, "X-direction," "Y-direction," and "Z-direction" may be described with reference to a spatial Cartesian coordinate system defined by mutually orthogonal X, Y, and Z axes. Unless otherwise stated, the Z-direction (or third direction) may refer to a vertical direction, the X-direction (or first direction) may refer to any direction perpendicular to the vertical direction, and the Y-direction (or second direction) may refer to a direction perpendicular to both the X-direction and Z-direction. However, it should be understood that the references to X, Y, and Z directions are for descriptive purposes and may be defined differently depending on the chosen frame of reference.

In the present disclosure, the term "electrically connected" may refer to any type of connection by which multiple objects are electrically communicable with one another without limitation, and may include both direct connections between the objects or connections mediated by a third object.

A component defined as "...unit" in the present disclosure may refer to a single element or a group of two or more elements that are functionally similar or related, without limitation. Such a group of elements may be composed in any combination of hardware, software, or both.

In the present disclosure, the term "disposed" may refer, without limitation, to any spatial relationship in which one object is placed adjacent to another. Non-limiting examples include: coating one object on another; bonding one object to another with an adhesive; attaching by applying heat, pressure, or both; simply positioning at least a portion of one object in contact with at least a portion of another object within a space; or fixing it in place.

The term "hydrophobicity" used in the present disclosure may refer to a general property of lacking affinity for water or other aqueous media. Non-limiting examples may include properties such as resisting penetration by water or aqueous media, not dissolving or dispersing in water or aqueous media, or tending not to be wetted by water or aqueous media.

The term "secondary battery" as used in the present disclosure may refer to a battery that generates electrical energy via oxidation and reduction reactions during insertion and extraction of cations such as lithium ions into and from a positive electrode and a negative electrode. Specifically, the term "secondary battery" may refer to any of a lithium cobalt battery, lithium high-nickel battery, lithium iron phosphate battery, lithium-ion battery, lithium polymer battery, lithium-sulfur battery, nickel-metal hydride battery, nickel-cadmium battery, sodium battery, or all-solid-state battery. For example, the term "secondary battery" may refer to a lithium-ion secondary battery, although it is not limited thereto.

The term "battery assembly" as used in the present disclosure may be a general term referring to a battery module or a battery pack. Accordingly, the battery assembly according to the present disclosure may refer to a battery module, or may refer to a battery pack that accommodates a plurality of battery cells without a battery module structure, such as in a cell-to-pack (CTP) configuration.

The term "battery cell" as used in the present disclosure may refer to the basic unit of a secondary battery that includes an electrode assembly, an electrolyte, and an exterior material, and is capable of charging and discharging electrical energy.

Hereinafter, the embodiments of the present disclosure will be described in detail. However, the following description is merely illustrative, and the embodiments of the present disclosure is not limited to the specific embodiments described.

## Physical Properties of the Insulating Filler

A battery assembly according to an embodiment of the present disclosure may comprise a plurality of battery cells; a receiving case configured to accommodate the plurality of the battery cells; an insertion space formed inside the receiving case; and an insulating filler disposed in the insertion space, wherein the insulating filler may have hydrophobicity.

The insertion space according to an embodiment may broadly refer to any empty space formed within the battery assembly, specifically within the receiving case, without limitation. More specifically, it may refer to any space other than the spaces occupied by components located within the receiving case. For example, it may refer, without limitation, to a space between two or more of the plurality of the battery cells, a space between the plurality of the battery cells and the receiving case as will be described below, or a space between the plurality of the battery cells, the receiving case, other additional components, or any combination thereof, constituting the battery assembly.

The insulating filler according to an embodiment may be non-limitedly configured to be disposed in the insertion space and physically fill at least a portion of the insertion space to thermally, electrically, or both, insulate the space.

The insulating filler according to an embodiment may have at least one of the physical properties described below, and specifically, may have all of the physical properties described below.

### 1. Hydrophobicity

In an embodiment, the insulating filler may have hydrophobicity.

In an embodiment, the insulating filler may have hydrophobicity, which may mean that at least a portion of the insulating filler exhibits hydrophobic properties.

In an embodiment, the insulating filler may have at least its surface rendered hydrophobic. In such an embodiment, the entire surface of the insulating filler may exhibit hydrophobicity.

In another embodiment, not only the surface but also the interior enclosed by the surface of the insulating filler may be hydrophobic.

In an embodiment, the insulating filler may have an octanol-water partition coefficient ($LogP_{ow}$) greater than 0.

The octanol-water partition coefficient is an effective parameter for identifying or characterizing the hydrophilicity or hydrophobicity of a wide range of compounds, and it may be particularly useful for identifying or measuring the hydrophobicity of nonpolar compounds.

The octanol-water partition coefficient may be defined as the ratio of the amount of a solute dissolved in an organic phase (octanol) to the amount of the solute dissolved in an aqueous phase (water), based on equal volumes (or masses) of the two phases. In an embodiment, an arbitrary substance A, the $P_{ow}$ may satisfy the relationship defined by the following Equation 1-1:

$$P_{ow} = \text{(Solubility of A in organic phase (octanol))} / \text{(Solubility of A in aqueous phase (water))} \quad \text{[Equation 1-1]}$$

In an embodiment, the insulating filler may satisfy the relationship defined by the following Equation 1-2:

[Equation 1-2]

$$LogP_{ow} > 0$$

In an embodiment, the octanol-water partition coefficient of the insulating filler may refer to a value measured after dissolving the insulating filler as a solute and using octanol and water as solvents. The octanol-water partition coefficient may be calculated, for example, using Software V11.02 developed by Advanced Chemistry Development (ACD/Labs).

In an embodiment, the water contact angle of the insulating filler may be greater than 60°.

The water contact angle may serve as an indicator of the wettability of a material (particularly a solid material) surface, and can be particularly useful for determining, measuring, or characterizing the hydrophilicity or hydrophobicity of the material surface.

The water contact angle may be defined as the angle formed by an aqueous medium on the surface of a measurement target in a thermodynamic equilibrium state. Specifically, in the present disclosure, it may be defined as the angle between the interface of a water droplet and the surface of the measurement target when the droplet is in an equilibrium state on the surface.

In an embodiment, the water contact angle of the insulating filler may refer to a measured value obtained by placing a droplet on the surface of the insulating filler after preparing it as a specimen. The water contact angle may be measured and calculated, for example, in accordance with ASTM D 5946 or a method equivalent thereto.

In an embodiment, the water contact angle of the insulating filler may be greater than 60°, as described above. Alternatively, the water contact angle may be 65° or more, 70° or more, 75° or more, 80° or more, 85° or more, 90° or more, 95° or more, 100° or more, 105° or more, 110° or more, 115° or more, 120° or more, 125° or more, 130° or more, 135° or more, 140° or more, 145° or more, or 150° or more.

In an embodiment, the surface energy of the insulating filler may be 72 mN/m (millinewtons per meter) or less.

The surface energy is excess energy associated with the presence of a surface, and when comparing the surface energy of water with that of a material to be measured, it can be particularly useful for determining, measuring, or characterizing the hydrophilicity or hydrophobicity of the material surface. For example, when the surface energy of a material is low, it may indicate that the surface tension of the material is weak, which in turn may indicate that the material surface is hydrophobic.

In an embodiment, the surface energy of the insulating filler may be calculated based on the water contact angle, which is measured by placing a droplet on the surface of the insulating filler after preparing a specimen of the insulating filler. The surface energy may be calculated using, for example, an indirect measurement method using the water contact angle (Owens-Wendt-Geometri), and may be measured and calculated according to, for example, ASTM D 7490 or a method equivalent thereto.

In an embodiment, the surface energy of the insulating filler may be 72 mN/m or less, as described above. Alternatively, the surface energy may be 70 mN/m or less, 67 mN/m or less, 64 mN/m or less, 60 mN/m or less, 55 mN/m or less, 50 mN/m or less, 46 mN/m or less, 42 mN/m or less, 40 mN/m or less, 36 mN/m or less, 33 mN/m or less, or 30 mN/m or less.

In a specific embodiment, the surface energy of the insulating filler may be 30 mN/m or less.

In an embodiment, the water absorption of the insulating filler may be 2% or less.

By measuring the water absorption, it is possible to identify the material properties of the subject under high-humidity conditions. Through this, it is particularly useful for determining, measuring, or characterizing the hydrophilicity or hydrophobicity of the material surface, or the degree to which an aqueous medium penetrates into the interior of the material.

In an embodiment, the water absorption may be measured and calculated based on the weight change of the prepared specimen insulating filler that occurs by immersing the prepared specimen insulating filler in an aqueous medium. For example, the water absorption may be measured and calculated in accordance with ASTM D 570 or a method equivalent thereto.

Specifically, the water absorption may be measured and calculated by comparing the weight of the prepared specimen insulating filler before and after immersion. In an embodiment, the water absorption (WA) may satisfy the relationship defined by Equation 1-3 below:

WA(%) = [{(Weight of the prepared specimen insulating filler after immersion) - (Weight of the prepared specimen insulating filler before immersion)} / (Weight of the prepared specimen insulating filler before immersion)] × 100 [Equation 1-3]

In an embodiment, the insulating filler may satisfy at least one of the above-described parameters related to the octanol-water partition coefficient, water contact angle, surface energy, or water absorption.

In a specific embodiment, the insulating filler may satisfy all of the following relationships (1) to (4). The detailed descriptions of each of the following relationships may be equally applicable as described above.

$$(1)\ \mathrm{LogP_{ow}} > 0$$

$$(2)\ \text{Water contact angle} > 60°$$

$$(3)\ \text{Surface energy} \leq 72\ \mathrm{mN/m}$$

$$(4)\ \text{Water absorption} \leq 2\%$$

**2. Insulating Properties**

In an embodiment, the insulating filler may have insulating properties. In an embodiment, the insulating filler may have thermal insulation or electrical insulation. In a specific embodiment, the insulating filler may have both thermal

insulation and electrical insulation.

In an embodiment, the insulating filler may have a thermal conductivity of 0.1 W/m·K or less.

In an embodiment, the insulating filler may have a thermal conductivity of 0.1 W/m·K or less as determined in accordance with ISO 22007. For example, the thermal conductivity may be measured in the thickness direction of a prepared specimen insulating filler in accordance with the ISO 22007 standard.

In such an embodiment, the insulating filler may exhibit a desired thermal insulation property, and when inserted into a void space within the battery assembly, may thermally block the void space and block or suppress the propagation path of flame and heat.

In an embodiment, the insulating filler may have a volume resistivity of 2000 Ω·m or more.

In an embodiment, the insulating filler may have a volume resistivity of 2000 Ω·m or more as determined in accordance with ASTM D257. For example, the volume resistivity may be measured by applying current or voltage to a specimen of the insulating filler in accordance with ASTM D257.

In such an embodiment, the insulating filler may exhibit the desired electrical insulation property and, when inserted into an empty space in the battery assembly, may electrically block or suppress two or more electrical sources present via the empty space.

In an embodiment, the insulating filler may have a thermal conductivity of 0.1 W/m·K or less, and at the same time, the insulating filler may have a volume resistivity of 2000 Ω·m or more. In an embodiment, the insulating filler may have a thermal conductivity of 0.1 W/m·K or less as determined in accordance with ISO 22007, and at the same time, the insulating filler may have a volume resistivity of 2000 Ω·m or more as determined in accordance with ASTM D257.

## Insulating Filler

The insulating filler according to an embodiment of the present disclosure may exhibit the above-described properties. In a specific embodiment, the insulating filler may exhibit all of the above-described properties.

The insulating filler according to an embodiment of the present disclosure may include a polymer or copolymer comprising hydrophobic moieties in its main chain. In an embodiment, the insulating filler may include a polymer or copolymer in which the main chain is necessarily composed of hydrophobic moieties.

The insulating filler according to an embodiment of the present disclosure may include a polymer comprising a unit represented by the following Chemical Formula 1:

[Chemical Formula 1]

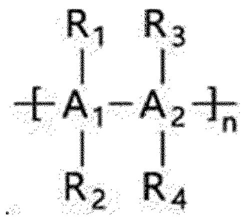

In Chemical Formula 1:

$A_1$ and $A_2$ may be the same or different from each other, and each independently a Group 14 element or a Group 16 element, provided that at least one of $A_1$ and $A_2$ is a Group 14 element.

$R_1$ and $R_2$ may be the same or different from each other, and each independently selected from the group consisting of hydrogen, halogen, alkyl, alkenyl, alkynyl, aryl, aralkyl, alkoxy, alkenyloxy, aryloxy, and aralkoxy.

$R_3$ and $R_4$ may be absent or, when present, may be the same or different from each other, and each independently selected from the group consisting of hydrogen, halogen, alkyl, alkenyl, alkynyl, aryl, aralkyl, alkoxy, alkenyloxy, aryloxy, and aralkoxy.

The "n" may be an integer representing the number of repeating units and may range from 1 to 1,000,000.

In a specific embodiment, $A_1$ is a Group 14 element, $A_2$ may be a Group 14 or Group 16 element, and when $A_2$ is a Group 16 element, $R_3$ and $R_4$ may be absent.

In a specific embodiment, $A_1$ may be carbon or silicon, and when $A_2$ is a Group 16 element, $A_2$ may be oxygen.

In a specific embodiment, when at least one of $R_1$ to $R_4$ is an alkyl group, it may be a $C_1$~$C_{10}$ alkyl group, a $C_1$~$C_6$ alkyl group, or a $C_1$~$C_3$ alkyl group.

In a specific embodiment, when at least one of $R_1$ to $R_4$ is an aryl group, it may be a $C_6$~$C_{12}$ aryl group.

In an embodiment, the insulating filler may include a polymer comprising one of the units represented by Chemical Formula 1.

In an embodiment, the insulating filler may include a copolymer comprising at least two or more units represented by Chemical Formula 1. In this case, each of the repeating units may independently have a number of repeating units

ranging from 1 to 1,000,000.

In an embodiment, the insulating filler may include any one polymer selected from the group consisting of a polysiloxane-based polymer, a polyethylene-based polymer, a polypropylene-based polymer, a polytetrafluoroethylene-based polymer, and a polystyrene-based polymer; or a copolymer comprising two or more of the polymers selected from the group.

In an embodiment, the insulating filler may include a polysiloxane-based polymer.

The polysiloxane-based polymer may be a siloxane polymer or a siloxane copolymer having a structure including ...O-Si-O-Si... bonding in the main chain. From the perspective of Chemical Formula 1, in an embodiment, the polysiloxane-based polymer may be a polymer or copolymer including hydrophobic moieties in the main chain.

In an embodiment, the insulating filler may include polydimethylsiloxane (PDMS).

In an embodiment, the insulating filler may be a foam. That is, In an embodiment, the insulating filler may be a foam obtained by foaming a foamable precursor comprising the aforementioned composition.

The insulating filler according to an embodiment may exhibit both insulation and hydrophobicity. The insulating filler may be provided to fill an insertion space in the battery assembly, as will be described below, thereby blocking the propagation path of heat or flame in the event of thermal runaway, while at the same time preventing deterioration of insulation (particularly electrical insulation) even in a humid environment, thereby further enhancing the effect of suppressing or blocking thermal runaway.

## Battery Assembly

FIG. 1 is a view illustrating a battery assembly according to an embodiment of the present disclosure, in a state where an insulating filler is not included.

FIG. 1 illustrates both the arrangement relationship and the assembled state of the components excluding the insulating filler in a battery assembly according to an embodiment of the present disclosure. In FIG. 1, for convenience of description, the battery assembly is illustrated as a symmetrical two-piece structure. However, it is to be understood that the battery assembly of the present disclosure is not necessarily limited thereto, and that the detailed configuration, shape, and other aspects of each illustrated component do not limit the scope of the battery assembly of the present disclosure as long as they do not depart from the definitions provided herein. This applies equally to all of the drawings below.

The battery assembly 10 according to an embodiment of the present disclosure may comprise a plurality of battery cells 110; a receiving case 120 configured to accommodate the plurality of the battery cells 110; an insertion space 140 formed in the receiving case 120; and an insulating filler disposed in the insertion space 140. As will be described below, the insulating filler may physically fill the insertion space 140, that is, at least a portion of a space inside the battery assembly 10.

In an embodiment, the plurality of the battery cells 110 may be stacked in a predetermined stacking direction, and the insertion space 140 may be formed between the plurality of the battery cells 110 and the receiving case 120.

For example, based on what is illustrated in FIG. 1, the stacking direction may refer to a direction parallel to the X-direction.

As will be described later, in an embodiment, each of the plurality of the battery cells 110 may include a cell case 111, which is an exterior member accommodating an electrode assembly (not shown) for generating or storing electrical energy, and a lead tab portion 112 protruding outward from the cell case 111. The cell case 111 may include, in its internal space, an electrode assembly (not shown) that is electrically connected to the lead tab portion 112 and generates and stores electrical energy therein.

In an embodiment, the electrode assembly (not shown) may include a positive electrode (cathode) and a negative electrode (anode).

According to an embodiment, the cell case 111 shown in FIG. 1 (and FIG. 4 described below) may be a pouch-type exterior material with at least one sealed portion, and thus the battery cell 110 may be a pouch-type battery cell. However, the battery cell 110 may alternatively be a prismatic or cylindrical battery cell.

According to an embodiment, with reference to FIG. 4 described below, the lead tab portion 112 may include a first lead tab portion 1121 and a second lead tab portion 1122 protruding in a direction away from the cell case 111 from both side surfaces of the cell case 111. However, the lead tab portion 112 may in another embodiment include both tabs on only one of the side surfaces.

In an embodiment, the receiving case 120 may accommodate the plurality of the battery cells 110. In an embodiment, the plurality of the battery cells 110 may be accommodated in the receiving case 120. The receiving case 120 may be configured to protect the accommodated objects-specifically, the objects including the plurality of the battery cells 110 accommodated in the receiving case 120-from external impacts such as vibration.

The receiving case 120 may accommodate, together with the plurality of the battery cells 110, one or more barriers 160 respectively inserted between any two adjacent battery cells 110 among the plurality of the battery cells 110, and a busbar assembly 150 including a busbar 153 electrically connected to the plurality of the battery cells 110.

In an embodiment, the receiving case 120 may include a receiving space 123 having an open surface, and may further include a receiving body 121 configured to accommodate the plurality of the battery cells 110 in the receiving space 123, and a receiving cover 122 coupled to the receiving body 121 to cover the open surface.

Referring to FIG. 1, In an embodiment, the receiving body 121 may be provided in a rectangular parallelepiped or cubic shape having one open surface as described above.

In a specific embodiment, the receiving body 121 may include a body bottom side 1211 forming a bottom surface of the receiving space 123; one or more end plates 1213 extending in the direction of the open surface from corners (not shown) of the body bottom side 1211 that are aligned along the stacking direction; and one or more body side portions 1212 provided at both ends of the battery cell stack of the plurality of the battery cells 110 along the stacking direction. That is, based on the configuration shown in FIG. 1, the body bottom side 1211 may be located at the bottom in the Z-direction. The one or more end plates 1213 may be coupled to one pair of edges of the body bottom side 1211 extending in a direction parallel to the X-direction, and the one or more body side portions 1212 may be coupled to the other pair of edges of the body bottom side 1211 extending in a direction parallel to the Y-direction. In this embodiment, the open surface of the receiving body 121 having the above-described coupling relationship may refer to the top surface with respect to the Z-direction.

Referring to FIG. 1, In an embodiment, the receiving cover 122 may be coupled to the receiving body 121 to cover the open surface of the receiving body 121. In an embodiment, the receiving cover 122 may form the receiving space 123 together with the receiving body 121. As described above, the receiving cover 122 may define the receiving case 120 together with the receiving body 121.

In an embodiment, the receiving body 121 may be coupled to the receiving cover 122. In a specific embodiment, the receiving cover 122 may be coupled to the receiving body 121 so as to be positioned parallel to the body bottom side 1211. In a specific embodiment, the edges of the end plate 1213 and the body side portion 1212 that face the edges at the junction with the body bottom side 1211 may each be coupled to the receiving cover 122. With this configuration, the receiving cover 122 may be configured to cover the open surface of the receiving body 121.

Referring to FIG. 1, the battery assembly 10 may include two receiving spaces 123. In this case, the plurality of the battery cells 110, the barrier(s) 160, the busbar assembly 150 or any combination thereof may be accommodated in two sets, each in a respective receiving space 123. In this case, the two receiving spaces 123 may be partitioned by a center frame 1214 (see FIG. 1). In an embodiment, the center frame 1214 may further include various functional configurations such as a cooling flow path or a thermal barrier member, but is not necessarily limited thereto.

In an embodiment, an insertion space 140 (see FIG. 2) may be formed between the plurality of the battery cells 110 and the receiving case 120. As described above, the insulating filler 130 according to an embodiment of the present disclosure may be disposed in the insertion space 140 (see FIG. 4).

As will be described later, the insertion space 140 may broadly refer to an empty space formed between the plurality of the battery cells 110 and the receiving case 120, without limitation. From this perspective, the insertion space 140 may refer to a space that can be defined as an empty space within the receiving space 123, which is sealed from the outside by the receiving body 121 and the receiving cover 122 in the battery assembly 10 where the components are finally assembled.

The insertion space 140 may be divided into a plurality of insertion spaces by the components accommodated in the receiving space 123. Detailed description thereof will be provided below.

In an embodiment, the insulating filler 130 may be disposed in the insertion space 140. The insulating filler 130 may be disposed in the insertion space 140 to fill at least a portion of the insertion space 140, and, for example, may substantially completely fill the insertion space 140.

When a thermal runaway event occurs in the battery assembly 10 due to a cause such as at least one of the plurality of the battery cells 110 igniting as a result of a short circuit, deterioration, or the like, the flame, heat, and/or high-pressure and high-temperature gas generated from at least one of the plurality of the battery cells 110 may rapidly propagate to an adjacent battery cell 110 or another component through the insertion space 140. Alternatively, due to thermal convection or the like, the above-described flame and the like may propagate even more rapidly to the adjacent battery cell 110 or another component, or a voltage drop may occur as a result thereof.

The insulating filler 130 may be disposed in the insertion space 140 to fill at least a portion of the insertion space 140. As described above, the insulating filler 130 may have insulating properties, and thus may thermally and electrically insulate the insertion space 140, thereby thermally and electrically blocking the propagation path of flame, heat, high-pressure, high-temperature gas, or any combination thereof.

As described above, the insulating filler 130 may have hydrophobicity. Accordingly, even under a high-humidity environment that may be in a thermal runaway event or during general use, the electrical insulation properties may not be degraded.

When the insertion space 140 is partitioned into a plurality of insertion spaces by components accommodated in the receiving space 123 as described above, the insulating filler 130 may be disposed in at least some, and specifically in all, of the plurality of insertion spaces. Accordingly, at least a portion of the insertion spaces in which the insulating filler is

disposed, and the entire insertion space in which the filler is disposed, may be substantially completely filled.

From this perspective, in the battery assembly 10 according to the present disclosure, at least a portion of the insertion space 140, which may be formed inside the receiving case 120, may be filled with the insulating filler 130, or the insertion space 140 may be substantially completely filled with the insulating filler 130.

Referring to FIG. 1 (and FIG. 2 described below), in an embodiment, the battery assembly 10 may further comprise a busbar assembly 150 including a busbar electrically connected to the plurality of the battery cells 110 and a busbar frame supporting the busbar. The insertion space 140 may be located in at least one of a space between the plurality of the battery cells 110 and the busbar assembly 150, and a space between the receiving case 120 and the busbar assembly 150.

In a specific embodiment, the insertion space 140 may be located in both a space between the plurality of the battery cells 110 and the busbar assembly 150, and a space between the receiving case 120 and the busbar assembly 150.

In such an embodiment, the receiving case 120 may accommodate both the plurality of the battery cells 110 and the busbar assembly 150 including a busbar 153 electrically connected to the plurality of the battery cells 110. In this case, the insertion space 140 may be partitioned into at least two divided spaces by the plurality of the battery cells 110 and the busbar assembly 150. The at least two spaces partitioned as described above may be in communication with each other. Alternatively, the at least two spaces partitioned as described above may be spatially completely separated from each other without communication. Further details regarding the insertion space 140 will be described below.

Referring to FIG. 1 (and FIG. 3 and FIG. 4 described below), in an embodiment, each of the plurality of the battery cells 110 may include an electrode assembly (not shown); a cell case 111 accommodating the electrode assembly (not shown) therein; and a lead tab portion 112 electrically connected to the electrode assembly (not shown) and protruding outward from the cell case 111. The busbar assembly 150 may include a pair of side portions 151 extending along a stacking direction and a base portion 152 connecting the pair of side portions 151. The insertion space 140 may be located in at least one of: a space between the plurality of the battery cells 110 and the pair of side portions 151; a space between the plurality of the battery cells 110 and the base portion 152; and a space between the receiving case 120 and the pair of side portions 151.

As described above with reference to FIG. 1, and based on the illustration shown in FIG. 1, the stacking direction may refer to a direction parallel to the X direction.

As described above, each of the plurality of the battery cells 110 may include an electrode assembly (not shown), a cell case 111 that accommodates the electrode assembly therein, and a lead tab portion 112 that is electrically connected to the electrode assembly and protrudes outward from the cell case 111. Therefore, redundant description will be omitted hereinafter.

The busbar assembly 150 may include the busbar and the busbar frame as described above. The busbar frame may include a pair of first busbar frames extending along the stacking direction, and a second busbar frame connecting the pair of first busbar frames.

For example, based on what is shown in FIG. 1, the pair of first busbar frames may each extend along the X-direction, and the pair of first busbar frames extending in the X-direction may be configured to be respectively positioned at both ends in the Y-direction with respect to the plurality of the battery cells 110.

Referring again to FIG. 1, for example, the second busbar frame may be configured to be parallel to the XY plane and to connect the pair of first busbar frames. In this embodiment, the second busbar frame may be configured and arranged to additionally support or cover the plurality of the battery cells 110 in the Z-direction.

In such an embodiment, the busbar frame may be provided in an overall channel shape or a U-shape. In the same embodiment, the busbar assembly 150 may also be provided in an overall channel shape or a U-shape.

In an embodiment, the pair of first busbar frames and the second busbar frame may be configured such that each separately formed component is coupled to one another through a separate coupling member. Alternatively, in another embodiment, the pair of first busbar frames and the second busbar frame may be configured as an integrated (monolithic) structure.

The busbars may be mounted to the pair of first busbar frames. In an embodiment, the busbars may be provided as a plurality of independent units and may be respectively mounted to each of the pair of first busbar frames along the stacking direction. For example, a plurality of busbars may be mounted to one of the pair of first busbar frames as described above, and another plurality of busbars may be mounted to the other one of the pair of first busbar frames. In another embodiment, the busbars may be provided as a pair of busbars extending along the stacking direction, and may be respectively mounted to the pair of first busbar frames.

In view of the mounting configuration described above, the busbar assembly 150 may have a structure including a pair of first busbar frames extending along the stacking direction; a second busbar frame connecting the pair of first busbar frames; and busbars respectively mounted to the pair of first busbar frames. In this structure of the busbar assembly 150, the pair of side portions 151 may refer to the pair of first busbar frames to which the busbars are mounted, and the base portion 152 may refer to the second busbar frame.

In view of the foregoing structure of the busbar frame, in an embodiment, the pair of side portions 151 and the

base portion 152 may be configured as separately formed components that are coupled to each other by separate coupling members. Alternatively, in another embodiment, the pair of side portions 151 and the base portion 152 may be configured as an integrated structure.

The busbar or busbars, defined as components of the pair of side portions 151 and respectively mounted on the pair of first busbar frames, may be positioned in the protruding direction of the lead tab portions 112 of the plurality of the battery cells 110, and may be configured to be connected to the lead tab portions 112. In an embodiment, the lead tab portions 112 may be connected to the busbars by being inserted into slits formed in the busbars at corresponding positions.

In a specific embodiment, the insertion space 140 may be located in all of the following: between the plurality of the battery cells 110 and the pair of side portions 151, between the plurality of the battery cells 110 and the base portion 152, and between the receiving case 120 and the pair of side portions 151.

In this case, the insertion space 140 may be partitioned into at least three divided spaces by the plurality of the battery cells 110 and the busbar assembly 150. The at least three spaces partitioned as described above may be in communication with each other. Alternatively, the at least three spaces may not be in communication with each other and may be completely spatially separated. Further details regarding the insertion space 140 will be described later.

FIG. 2 is a view illustrating a cross-section in region A of the battery assembly shown in FIG. 1.

In an embodiment, the insertion space 140 may include a first insertion space 141 formed between the plurality of the battery cells 110 and the pair of side portions 151.

FIG. 2 illustrates the arrangement relationship between the plurality of the battery cells 110 and the busbar assembly 150 included in the receiving space 123, as well as the arrangement relationship among the receiving case 120, the plurality of the battery cells 110, and the busbar assembly 150.

In an embodiment, the battery assembly 10 may further include one or more barriers 160. The plurality of the battery cells 110 and the one or more barriers 160 may be stacked to form a battery cell stack 100.

In the battery cell stack 100, the one or more barriers 160 may be inserted between at least one pair of adjacent battery cells 110 among the plurality of the battery cells 110. An example of such a battery cell stack 100 is illustrated in FIG. 2.

In FIG. 2 and FIG. 3, which will be described later, one barrier 160 is shown as being arranged between every two battery cells 110 for convenience of description; however, this arrangement may vary depending on the desired thermal runaway mitigation or blocking performance, as well as the logical configuration.

In an embodiment, the "logical" may refer to a unit of a battery cell configuration that is arbitrarily set according to user requirements and may be defined in various forms as desired.

In FIG. 2, an embodiment is illustrated in which barriers 160 having different lengths in the Y-direction are arranged; however, the embodiments of the present disclosure are not limited thereto, and various arrangements may be employed according to the intended thermal runaway mitigation or blocking performance and the logical configuration. When necessary, in the embodiment shown in FIG. 2, a barrier 160 having a longer length in the Y-direction may be interpreted as barrier 160a, and a barrier 160 having a shorter length in the Y-direction may be interpreted as barrier 160b.

However, in some embodiments, the barrier 160 may not be provided as a separate component. For example, it may refer to a configuration in which the insulating filler 130 is disposed in the insertion space 140 formed between any two of the plurality of the battery cells 110.

The insertion space 140 may include a first insertion space 141. In an embodiment, as described above, the first insertion space 141 may be formed between the plurality of the battery cells 110 and the pair of side portions 151.

As described above, the pair of side portions 151 may refer to a pair of first busbar frames 154 on which the busbars 153 are mounted in the busbar assembly 150, when referring also to FIG. 4 to be described later. Each of the plurality of the battery cells 110 may include a first lead tab portion 1121 and a second lead tab portion 1122, which protrude from both side surfaces of the cell case 111 in directions away from the cell case 111. When the first lead tab portion 1121 protrudes in one direction, the second lead tab portion 1122 may protrude in a direction opposite to the one direction.

Referring to FIG. 2 (and FIG. 4 described below), In an embodiment, the first lead tab portions 1121 of each of the plurality of the battery cells 110 may be connected to one of the pair of side portions 151, and the second lead tab portions 1122 of each of the plurality of the battery cells 110 may be connected to the other one of the pair of side portions 151.

Through such an arrangement, the first insertion space 141 may specifically refer to an empty space formed between the battery cell stack 100 including the plurality of the battery cells 110 and the pair of side portions 151 spaced apart from each other. For example, referring to FIG. 2, the first insertion space 141 may refer to an empty space formed by the battery cell stack 100 and the pair of side portions 151 being spaced apart from each other in the Y-direction (+Y direction and -Y direction).

In an embodiment, as described above, the pair of side portions 151 may be positioned spaced apart from both sides of the plurality of the battery cells 110. Accordingly, the first insertion space 141 may be partially divided into two spaces by the plurality of the battery cells 110, specifically by the battery cell stack 100 including the plurality of the battery cells 110. In an embodiment, the first insertion space 141 on the side where the first lead tab portions 1121 are located may be defined as a first-first insertion space 1411, and the first insertion space 141 on the side where the second lead tab

portions 1122 are located may be defined as a first-second insertion space 1412. However, the first-first insertion space 1411 and the first-second insertion space 1412 may not be spatially separated and may be in communication with each other. This configuration allows for improved structural organization and facilitates efficient routing or insulation of the lead tab portions within the battery assembly.

Additionally, the first-first insertion space 1411 and the first-second insertion space 1412 may each be further subdivided into a plurality of spaces by the first lead tab portions 1121 and the second lead tab portions 1122, respectively.

That is, in such an embodiment, the first insertion space 141 may be defined as an empty space that is in direct contact with the terrace portions of the plurality of the battery cells 110 within the battery assembly 10, and that may be separated from the remaining space by the busbar assembly 150.

Referring again to FIG. 2, in an embodiment, the insertion space 140 may include a second insertion space 142 formed between the receiving case 120 and the pair of side portions 151.

As described above, the receiving case 120 may include a receiving body 121 that includes a receiving space 123 for accommodating the plurality of the battery cells 110 and the like. The configuration of the receiving case 120 shown in FIG. 2 may correspond to the configuration of the receiving body 121.

In view of the above-described arrangement, the second insertion space 142 may specifically refer to an empty space formed by a separation between the pair of side portions 151 and the receiving body 121. For example, based on FIG. 2, the second insertion space 142 may refer to an empty space formed by the receiving body 121 and the pair of side portions 151 being spaced apart in the Y-direction (+Y direction and -Y direction). Based on FIG. 2, the configuration of the receiving body 121 that is spaced apart in the Y-direction from the pair of side portions 151, as described above, may be the end plate 1213, or both the end plate 1213 and the center frame 1214. However, the embodiments of the present disclosure are not necessarily limited thereto, and any configuration defined as the receiving case 120 that is adjacent to the side portion 151 of the busbar assembly 150 as described above is not particularly limited.

In an embodiment, as described above, the first insertion space 141 may be divided into a first-first insertion space 1411 and a first-second insertion space 1412. In the same context, referring to FIG. 2 (and FIG. 4 described below), in an embodiment, the second insertion space 142 may be partitioned by one of the first-first insertion space 1411 and the pair of side portions 151, and may include a second-first insertion space 1421 adjacent to the first-first insertion space 1411, and a second-second insertion space 1422 partitioned by the first-second insertion space 1412 and the other one of the pair of side portions 151, the second-second insertion space 1422 being adjacent to the first-second insertion space 1412. In an embodiment, the second-first insertion space 1421 and the second-second insertion space 1422 may be spatially isolated from each other. In another embodiment, the second-first insertion space 1421 and the second-second insertion space 1422 may be in communication with each other via a third insertion space 143 which will be described later.

From this perspective, in an embodiment, the second insertion space 142 may be defined as an empty space located outside the first insertion space 141 with respect to the pair of side portions 151.

FIG. 3 is a view illustrating a cross-section in region B of the battery assembly shown in FIG. 1.

Referring to FIG. 3, In an embodiment, the insertion space 140 may include a third insertion space 143 formed between the plurality of the battery cells 110 and the base portion 152.

FIG. 3 illustrates another arrangement relationship between the plurality of the battery cells 110 and the busbar assembly 150 included in the receiving space 123, and the arrangement relationship between the receiving case 120 and the plurality of the battery cells 110 and the busbar assembly 150.

The insertion space 140 may include a third insertion space 143. In an embodiment, as described above, the third insertion space 143 may be formed between the plurality of the battery cells 110 and the base portion 152.

As described above, the receiving case 120 may include a receiving body 121 including a receiving space 123 for accommodating the plurality of the battery cells 110 and the like, and a receiving cover 122 coupled to the receiving body 121 to cover one surface of the receiving body 121.

As described above, the base portion 152 may refer to the second busbar frame that connects the pair of first busbar frames 154 in the busbar assembly 150.

Each of the plurality of the battery cells 110 may include a folding portion 1111 that protrudes from the cell case 111 in a direction perpendicular to the protrusion direction of the lead tab portion 112.

In an embodiment, the plurality of the battery cells 110 may be stacked such that the protrusion directions of the folding portions 1111 are aligned. Referring to FIG. 3, the protrusion direction of the folding portion 1111 may be in the Z direction.

Referring to FIG. 3, the receiving cover 122 may be coupled to the receiving body 121 in the Z direction to cover the open surface of the receiving body 121. As a result, the receiving cover 122 may be configured to support or cover, in the Z direction, the objects accommodated in the receiving space 123, such as the plurality of the battery cells 110 (specifically, the battery cell stack) and the busbar assembly 150.

Referring again to FIG. 3, the base portion 152 may be configured to additionally support or cover the plurality of the battery cells 110 in the Z direction as described above. However, due to the structural characteristics of the battery cells 110 as described above, the base portion 152 may be arranged spaced apart from the plurality of the battery cells 110 by a

predetermined distance.

Through this arrangement, the third insertion space may specifically refer to an empty space formed between the battery cell stack 100, which includes the plurality of the battery cells 110, and the receiving cover 122. For example, based on what is shown in FIG. 3, the third insertion space may refer to an empty space formed by a separation between the battery cell stack 100 and the receiving cover 122 in the Z direction (i.e., the +Z direction).

In an embodiment, as described above, the base portion 152 of the busbar assembly 150 may be disposed between the receiving cover 122 and the plurality of the battery cells 110. Accordingly, the third insertion space 143 may be partially divided into two spaces by the base portion 152. In an embodiment, when referring also to FIG. 6 to be described later, the empty space between the battery cell stack 100 (which includes the plurality of the battery cells 110) and the base portion 152 may be defined as a third-first insertion space 1431, and the empty space between the base portion 152 and the receiving cover 122 may be defined as a third-second insertion space 1432. However, the third-first insertion space 1431 and the third-second insertion space 1432 may not be spatially isolated and may be in communication with each other.

That is, in such an embodiment, the third insertion space 143 may be defined as an empty space formed above the plurality of the battery cells 110 in the battery assembly 10.

FIG. 4 is a view illustrating an enlarged region A1 of the battery assembly shown in FIG. 2, in which an insulating filler is disposed.

FIG. 5 is a view illustrating another enlarged region A1 of the battery assembly shown in FIG. 2, in which an insulating filler is disposed.

FIG. 6 is a view illustrating an enlarged region B1 of the battery assembly shown in FIG. 3, in which an insulating filler is disposed.

Referring to Figures 4 to 6, In an embodiment, the insulating filler 130 may be provided in a foamed and filled form in the insertion space 140, and may fill the insertion space 140.

The insulating filler 130 may be a foam. The insulating filler 130 be a foam formed by foaming a foamable precursor.

In an embodiment, the insulating filler 130 may be foamed within the insertion space 140 and may fill the insertion space 140 in a manner that the insertion space 140 is charged with the foamed filler.

In an embodiment, the insulating filler 130 may be injected into the insertion space 140 in the form of a liquid precursor, and may be foamed in the insertion space 140 either simultaneously with the injection or after the injection.

The foamable precursor may be present in the form of a liquid precursor. For example, in order to foam the insulating filler 130 having the physical properties according to an embodiment of the present disclosure within the insertion space 140, the precursor may be composed of a mixture of a main agent and a curing agent.

In an embodiment, a hole may be formed at a desired location in the receiving case 120. For example, the hole may be a pre-formed injection hole, or alternatively, the hole may be formed during the injection process.

The main agent and curing agent may, for example, foam immediately upon mixing. In an embodiment, the main agent and curing agent may be prepared separately and mixed immediately before injection. Alternatively, they may be injected concurrently with mixing using a pneumatic gun or the like. According to such an embodiment, the precursor may be foamed within the insertion space 140 either simultaneously with the injection into the insertion space 140, or immediately after the injection.

In an embodiment, the insulating filler 130 may be foamed while being injected into the insertion space 140 in the form of a liquid precursor, may be foamed immediately after the injection, or may be foamed both ways. Since the foam formed by the foaming is relatively soft, the insertion space 140 can be efficiently filled regardless of the internal shape of the insertion space 140.

In an embodiment, the insulating filler 130 may fill 90% or more of the total volume of the insertion space 140. In a specific embodiment, the insulating filler 130 may fill 92% or more, 95% or more, 98% or more, or 99% or more of the total volume of the insertion space 140. In an embodiment, the insulating filler 130 may substantially completely fill the insertion space 140.

That is, in such an embodiment, the insulating filler 130 may be provided in the form of a foam within the insertion space 140, and may be a foam that is foamed only upon or immediately after being introduced into the insertion space 140.

Hereinafter, specific embodiments in which the above-described foamed filling aspect is applied to each of the insertion spaces 140 will be described. Referring to FIG. 4, In an embodiment, the insulating filler 130 may be provided in a form filled by foaming in the first insertion space 141, and may fill the first insertion space 141.

Referring to FIG. 4, in an embodiment, the insulating filler 130 may be provided in a foamed and filled form in the second insertion space 142, and may fill the second insertion space 142.

In an embodiment, the insulating filler 130 may be provided in a foamed and filled form in both the first insertion space 141 and the second insertion space 142, and may fill the first insertion space 141 and the second insertion space 142.

Referring to FIG. 5, the manner in which the first insertion space 141 and the second insertion space 142 are filled

with foam may differ slightly.

In FIG. 5, the filling of the first insertion space 141 with the insulating filler 130 is the same as previously described with reference to FIG. 4. However, the insulating filler 130 may fill only a portion of the second insertion space 142.

The battery assembly 10 according to an embodiment of the present disclosure may further include an insulating cover 131. The insulating cover 131 may refer to a cover in the form of a sheet or pad having insulating properties (thermal insulation and/or electrical insulation), and may also correspond to an insulating filler 130b in the form of a pre-formed foam, as shown in FIG. 7, which will be described later. The insulating cover 131 may be located in the second insertion space 142.

In such an embodiment, (see FIG. 5) the second insertion space 142 may be further partitioned by the insulating cover 131. In an embodiment, among the partitioned spaces, an empty space formed between the insulating cover 131 and one of the pair of side portions 151 may be filled with the insulating filler 130 in a foamed state. On the other hand, the empty space formed between the insulating cover 131 and the receiving body 121 may remain unfilled by the insulating filler 130.

In a modified embodiment, the insertion space 140 located relatively close to the plurality of the battery cells 110 may be filled with the insulating filler 130, while the insertion space 140 located relatively far from the plurality of the battery cells 110 may be configured to remain unfilled with the insulating filler 130, as needed. Alternatively, in a modified embodiment, the insertion space 140 located relatively close to the plurality of the battery cells 110 may be filled with the insulating filler 130 at a high density, while the insertion space 140 located relatively far from the plurality of the battery cells 110 may be filled with the insulating filler 130 at a relatively low density.

In the embodiment described above, the insulating filler 130 can effectively fill the empty space in the direction of the terrace portions of the plurality of the battery cells 110 within the battery assembly 10, and can thermally, electrically, or both insulate the empty space effectively.

Referring to FIG. 6, in an embodiment, the insulating filler 130 may be provided in a foam-filled form in the third insertion space 143 and may fill the third insertion space 143.

The third insertion space 143 may be partially divided into a third-first insertion space 1431 and a third-second insertion space 1432 by the base portion 152 of the busbar assembly 150. In an embodiment, the insulating filler 130 may be foam-filled in the same manner in both the third-first insertion space 1431 and the third-second insertion space 1432.

In another embodiment, the manner of foam filling in the third-first insertion space 1431 and the third-second insertion space 1432 may differ to some extent. In a modified embodiment, the insulating filler 130 may be filled at a higher density in the third-first insertion space 1431, which is located relatively closer to the plurality of the battery cells 110, while it may be filled at a relatively lower density in the third-second insertion space 1432, which is located relatively farther from the plurality of the battery cells 110.

In such an embodiment, the insulating filler 130 can effectively fill the empty space in the upper direction of the plurality of the battery cells 110 within the battery assembly 10, and can thermally and/or electrically insulate the empty space effectively.

In an embodiment, the insulating filler 130 may be provided in a foam-filled form in all of the first insertion space 141 to third insertion space 143, thereby filling the first insertion space 141 to third insertion space 143.

FIG. 7 is a view illustrating yet another enlarged region A1 of the battery assembly shown in FIG. 2, in which an insulating filler is disposed.

FIG. 8 is a view illustrating another enlarged region B1 of the battery assembly shown in FIG. 3, in which an insulating filler is disposed.

FIG. 9 is a view illustrating yet another enlarged region B1 of the battery assembly shown in FIG. 3, in which an insulating filler is disposed.

Referring to FIGS. 7 to 9, In an embodiment, the insulating filler 130 may be provided in a preformed foam form and inserted into the insertion space 140 to fill the insertion space 140.

The insulating filler 130 may be a foam, and accordingly, In an embodiment, the insulating filler may be a foam formed by foaming a foamable precursor, as described above.

In an embodiment, the insulating filler 130 may be pre-foamed into a predetermined shape before being placed in the insertion space 140, and then inserted into the insertion space 140 to fill the insertion space.

The shape of the foamed insulating filler 130 may be variously adopted depending on the shape of the insertion space 140 in which it is disposed. For example, the insulating filler 130 may be formed in the shape of a sheet or a pad. Alternatively, the insulating filler 130 may be formed in the shape of a column or a sphere.

When the insulating filler 130 is formed in the shape of a sheet or a pad, its surface shape may be non-limiting. For example, it may have a planar shape such as a triangle, quadrilateral, trapezoid, parallelogram, rectangle, square, circle, ellipse, oblong, pentagon, hexagon, other polygons, or a combination thereof. In the case of a polygonal shape, at least some of its vertices may be curved. Additionally, it may include curved surfaces in at least part of the structure. The thickness and/or area may also be variously configured depending on the insertion position and the desired insulation performance.

When the insulating filler 130 is formed in the shape of a column, its cross-sectional shape may be non-limiting. For example, the cross-section in the extending direction, in a direction perpendicular to the extending direction, or both may have a planar shape such as a triangle, quadrilateral, trapezoid, parallelogram, rectangle, square, circle, ellipse, oblong, pentagon, hexagon, other polygons, or a combination thereof. In the case of a polygonal shape, at least some of the vertices may be curved or rounded. Additionally, the column may be formed with multiple extending directions. The height, base diameter, length, or any combination thereof may also be variously configured depending on the insertion position and the desired insulation performance.

When the insulating filler 130 is formed in the shape of a sphere, it may include not only spheres with circular cross-sections but also spheres with elliptical or oblong cross-sections. In such cases, parameters such as radius, major/minor axes, and the like may also be variously configured depending on the insertion position and the desired insulation performance.

That is, in such an embodiment, the insulating filler 130 may be provided in the insertion space 140 in the form of a foam, wherein the foam is pre-foamed and formed into a desired shape before being inserted into the insertion space 140.

Hereinafter, specific embodiments in which the insertion method of the above-described foam is applied to each insertion space 140 will be described. Referring to FIG. 2 and FIG. 7, in an embodiment, the insulating filler 130b may be provided in the form of a pre-formed foam and may be inserted into the insertion space 140 to fill the insertion space 140.

FIG. 7 illustrates, for convenience of description, an insulating filler 130a according to an embodiment, which is injected and foamed in the battery assembly 10, and an insulating filler 130b according to another embodiment, which is pre-formed and inserted into the battery assembly 10. The insulating filler 130a according to an embodiment, which is injected and foamed in the battery assembly 10 may be referred to as a first insulating filler, and the insulating filler 130b according to another embodiment, which is pre-formed and inserted into the battery assembly 10 may be referred to as a second insulating filler. However, this distinction is merely for descriptive convenience, and it does not mean that the physical properties, materials, or other characteristics defined in the present disclosure are necessarily different.

FIG. 7 illustrates, for convenience of description, an embodiment in which a cylindrical or elliptical cylindrical insulating filler 130b is inserted into the first insertion space 141, and a sheet-shaped insulating filler 130b is inserted into the second insertion space 142. However, it is to be understood that the embodiments of the present disclosure are not limited thereto and various modifications may be made as necessary.

Referring to FIG. 7, the configuration of the insulating filler 130 disposed in the first insertion space 141 and the second insertion space 142 may differ. As previously described, the first insertion space 141 may be partitioned into a plurality of spaces by the lead tab portions 112 of the plurality of the battery cells 110. Accordingly, the insulating filler 130 may be individually disposed in each of the partitioned spaces formed by the lead tab portions 112. In this case, the shape, size, and number of the insulating fillers 130 disposed in each of the partitioned spaces may be independent of one another.

In such an embodiment, the insulating filler 130 may effectively fill the empty space toward the terrace portions of the plurality of the battery cells 110 in the battery assembly 10 and may thermally, electrically, or both insulate the empty space effectively.

As illustrated in FIG. 7, both the insulating filler 130a, which is dispensed into the battery assembly 10 and foam-filled, and the insulating filler 130b, which is pre-formed and inserted into the battery assembly 10, may be disposed together to fill the insertion space 140, and this may be selectively adopted without limitation.

FIG. 8 illustrates, for convenience of description, an embodiment in which a sheet-shaped insulating filler 130 is inserted adjacent to the base portion 152 in a direction facing the plurality of the battery cells 110. In this embodiment, the insulating filler 130 may be disposed in a form attached to the base portion 152. However, it should be understood that the embodiment of the present disclosure is not limited thereto, and various modifications may be made as needed.

Referring to FIG. 8, as described above, the configuration of the insulating filler 130 disposed in the third-first insertion space 1431 and the third-second insertion space 1432, which together form the third insertion space 143, may be the same or may differ to some extent. In an embodiment, the insulating filler 130 may be disposed only in the third-first insertion space 1431.

In such an embodiment, the insulating filler 130 can effectively fill the empty space located above the plurality of the battery cells 110 within the battery assembly 10, and can thermally, electrically, or both insulate the empty space effectively.

In an embodiment, the insulating filler 130 may be disposed in all of the first insertion space 141 to third insertion space 143, and may fill all of the first insertion space 141 to third insertion space 143.

In an embodiment, the insulating filler 130 filled in the first insertion space 141 to third insertion space 143 may independently be in the above-described foam-filled form or in the form of a pre-formed foam that is inserted. Alternatively, in at least some of the first insertion space 141 to third insertion space 143, both the foam-filled insulating filler 130 and the insulating filler 130 inserted as a pre-formed foam may be disposed together to fill the corresponding space. From this perspective, various modifications may be considered without limitation.

FIG. 9 illustrates an embodiment in which both the insulating filler 130a, which is filled by foaming after being

injected into the battery assembly 10 as shown in FIG. 7, and the insulating filler 130b, which is pre-formed and inserted into the battery assembly 10, are disposed. As such, the configuration of the insulating filler 130 disposed in the insertion space 140-specifically, in the third-first insertion space 1431 and the third-second insertion space 1432 that constitute the third insertion space 143-may be variously implemented.

Referring again to FIGS. 2 and 3, in an embodiment, the battery assembly 10 may include one or more barriers 160.

The one or more barriers 160 may be inserted between any two adjacent battery cells 110, and may be configured to block or minimize thermal propagation to adjacent battery cells 110 by blocking the propagation path in the cell stacking direction of flames, heat, high-pressure, or any combination thereof, high-temperature gases generated during a thermal runaway event caused by short-circuiting, degradation, or other failure of at least one of the plurality of the battery cells 110.

In an embodiment, the barrier 160 may have thermal insulation, heat resistance, electrical insulation, fire resistance, or any combination thereof properties so as to perform the function of blocking or minimizing thermal propagation as described above. Furthermore, the barrier 160 may have hydrophobicity.

In an embodiment, the barrier 160 may exhibit the same physical properties as the insulating filler according to an embodiment of the present disclosure. In another embodiment, the barrier 160 may include the same composition as the insulating filler according to an embodiment of the present disclosure.

In such a case, as described above, the insulating filler 130 according to an embodiment of the present disclosure may be employed as the configuration of the barrier 160. In an embodiment, the barrier 160 may be a foam obtained by foaming a foaming precursor and may have hydrophobicity and insulating properties as described in the foregoing description of the insulating filler 130 according to an embodiment of the present disclosure, and may be inserted between the battery cells 110 as described above.

In an embodiment, the barrier 160 may be in the form of a sheet or a pad, but is not necessarily limited thereto.

It is understood by those skilled in the art that the plurality of exemplary embodiments described above are specific examples of the following aspects.

Aspect 1: A battery assembly comprising: a plurality of battery cells; a receiving case configured to accommodate the plurality of battery cells; an insertion space formed inside the receiving case; and an insulating filler disposed in the insertion space; wherein the insulating filler has hydrophobicity.

Aspect 2: The battery assembly according to Aspect 1, wherein the insulating filler has an octanol-water partition coefficient ($LogP_{ow}$) greater than 0.

Aspect 3: The battery assembly according to Aspect 1 or 2, wherein the water contact angle of the insulating filler is greater than 60°.

Aspect 4: The battery assembly according to any one of Aspects 1 to 3, wherein the surface energy of the insulating filler is 72 mN/m or less, preferably, 30 mN/m or less.

Aspect 5: The battery assembly according to any one of Aspects 1 to 4, wherein the insulating filler has a water absorption of 2% or less.

Aspect 6: The battery assembly according to any one of Aspects 1 to 5, wherein the insulating filler has thermal conductivity of 0.1 W/m·K or less.

Aspect 7: The battery assembly according to any one of Aspects 1 to 6, wherein the insulating filler has a volume resistivity of 2000 Ω·m or more.

Aspect 8: The battery assembly according to any one of Aspects 1 to 7, wherein the insulating filler comprises: a polymer selected from the group consisting of a polysiloxane-based polymer, a polyethylene-based polymer, a polypropylene-based polymer, a polytetrafluoroethylene-based polymer, and a polystyrene-based polymer; or a copolymer comprising two or more of the polymers selected from the group, preferably, the insulating filler is in the form of a foam.

Aspect 9: The battery assembly according to any one of Aspects 1 to 8, further comprising a busbar assembly including a busbar electrically connected to the plurality of battery cells and a busbar frame supporting the busbar, wherein the insertion space is located in at least one of a space between the plurality of battery cells and the busbar assembly; and a space between the receiving case and the busbar assembly.

Aspect 10: The battery assembly according to Aspect 9, wherein each of the plurality of battery cells includes an electrode assembly; a cell case accommodating the electrode assembly therein; and a lead tab portion electrically connected to the electrode assembly and protruding outward from the cell case, wherein the busbar assembly includes a pair of side portions extending along a stacking direction of the plurality of battery cells; and a base portion connecting the pair of side portions, wherein the insertion space is located in at least one of a space between the plurality of battery cells and the pair of side portions; a space between the plurality of battery cells and the base portion; and a space between the receiving case and the pair of side portions.

Aspect 11: The battery assembly according to Aspect 9 or 10, wherein the insertion space includes (a) a first insertion space formed between the plurality of battery cells and the pair of side portions, and/or (b) a second insertion space formed between the receiving case and the pair of side portions, and/or (c) a third insertion space formed between the plurality of battery cells and the base portion.

Aspect 12: The battery assembly according to any one of Aspects 1 to 11, wherein the insulating filler is provided in a foam-filled form in the insertion space to fill at least part of the total volume of the insertion space, preferably, the insulating filler fills 90% or more of the total volume of the insertion space.

Aspect 13: The battery assembly according to Aspect 12, wherein the insulating filler is injected in the form of a liquid precursor into the insertion space and foamed in the insertion space during or after injection.

Aspect 14: 14. The battery assembly according to any one of Aspects 1 to 13, wherein the insulating filler is provided in a preformed foam form and is inserted into the insertion space to fill the insertion space.

Aspect 15: A battery assembly comprising: a receiving case configured to accommodate a plurality of battery cells; the plurality of battery cells disposed within the receiving case; a busbar assembly including a busbar electrically connected to the plurality of battery cells; an insulating filler disposed within the receiving case between the plurality of battery cells, the receiving case and the busbar, wherein the insulating filler is a polysiloxane-based polymer, a polyethylene-based polymer, a polypropylene-based polymer, a polytetrafluoroethylene-based polymer, a polystyrene-based polymer; or any combination thereof.

A battery assembly according to an embodiment of the present disclosure can be preferably used not only as a power source for small devices, but also as a power source for medium- and large-sized devices. Examples of the small devices include mobile phones, laptop computers, and cameras, and examples of the medium- and large-sized devices include electric vehicles, hybrid electric vehicles, plug-in hybrid electric vehicles, and power storage systems, but are not limited thereto.

Hereinafter, embodiments of the present disclosure will be further described with reference to specific experimental examples. The examples and comparative examples included in the experimental examples are merely illustrative of the embodiment ts of the present disclosure and are not intended to limit the scope of the appended claims. It will be apparent to those skilled in the art that various modifications and alterations to the embodiments can be made within the scope and technical concepts of the present disclosure, and it is natural that such modifications and alterations also fall within the scope of the appended claims. Furthermore, the embodiments can be combined to form additional embodiments.

## Example

FIG. 10 is a view illustrating the arrangement relationship among components constituting a battery module used in the embodiment of the present disclosure.

### Example

After preparing 36 pouch-type battery cells, 12 battery cell stacks 1 were prepared in a logical configuration, each comprising three battery cells. For each set of three battery cells, one insulating filler 2 in the form of a cured silicone foam, molded to match the shape corresponding to the main surface of the battery cell, was inserted. A heating pad was attached to the main surface of the first battery cell along the stacking direction of the battery cells.

A busbar assembly 3 including a base portion 31 having a predetermined area was prepared to be capable of covering the upper surface of the battery cell stack 1.

The prepared battery cell stack 1 was connected to the busbar assembly 3, and an insulating filler 2 in the form of a cured silicone foam, molded to correspond in size to the base portion 31, was inserted into the space between the upper surface of the battery cell stack 1 and the base portion 31 of the busbar assembly 3.

While accommodating the above assembly into a receiving space of a pre-prepared receiving case 4, a silicone-based main agent and a platinum catalyst curing agent were mixed using a pneumatic gun, and the mixture was injected into the space between the lead tab portions of the battery cells and the receiving case. Thereafter, the receiving case 4 was finally assembled to prepare a battery module. After assembly, the injected mixture foamed and cured at the injection location and was provided as an insulating filler.

The arrangement relationship among the battery cell stack 1, the silicone foam-type insulating filler 2, the busbar assembly 3, and the receiving case 4 as described above can be referred to in FIG. 10. The manner in which the insulating filler is provided by injecting, foaming, and curing a mixture in the space between the battery cell lead tab portions and the receiving case can be referred to in the aforementioned FIG. 4, and specifically, may correspond to the arrangement form of the insulating filler 130 in FIG. 4.

### Comparative Example

In the Comparative Example, a battery module was prepared in the same manner as in the Example, except that the insulating filler was not included. That is, referring to FIG. 10, unlike in the Example, the battery module of the Comparative Example does not include the silicone foam-type insulating filler 2. Also, referring to FIG. 4, it is a battery

module in which the insulating filler 130 is not provided.

**Evaluation Example**

**Evaluation Example 1: Evaluation of Physical Properties of the Insulating Filler**

(1) Evaluation of Hydrophobicity

The surface water contact angle of the insulating filler used in the Example was measured in accordance with ASTM D 5946 standard, and the measurement results are shown in Table 1 below.

Table 1

| **Run** | **Contact Angle (Degree)** |
|---|---|
| 1 | 57.8 |
| 2 | 60.0 |
| 3 | 60.5 |
| 4 | 61.7 |
| 5 | 62.1 |
| Standard Deviation (SD) | 1.71 |
| Coefficient of Variation (CV) (%) | 2.83 |
| **Average** | **60.4** |

As shown in Table 1 above, it was confirmed that the insulating filler used in the Example exhibited an average surface water contact angle of 60.4°.

The surface energy of the insulating filler used in the Example was measured in accordance with ASTM D 7490 using the Owens-Wendt geometric method based on the water contact angle, and the measurement results are shown in Table 2 below.

Table 2

| **Run** | **Surface Energy (mN/m)** | **Dispersive component of energy (mN/m)** | **Polar component of energy (mN/m)** |
|---|---|---|---|
| 1 | 29.69 | 29.24 | 0.446 |
| 2 | 28.38 | 28.02 | 0.366 |
| 3 | 28.22 | 27.56 | 0.659 |
| 4 | 27.40 | 27.15 | 0.245 |
| 5 | 27.19 | 26.91 | 0.283 |
| **Average** | **28.17** | 27.78 | 0.400 |

As shown in Table 2, it was confirmed that the insulating filler used in the Example exhibited a surface energy of 28.17 mN/m on average.

(2) Evaluation of Insulation Properties

1) Thermal Insulation Property

The thermal conductivity and thermal diffusivity of the insulating filler used in the Example were measured in accordance with ISO 22007, and the measurement results are shown in Table 3 below.

Table 3

| Temperature Condition (°C) | Thermal Conductivity (W/m·K) | Thermal Diffusivity ($mm^2/s$) |
|---|---|---|
| 25 | 0.078 | 0.203 |
| 180 | 0.097 | 0.167 |

2) Evaluation of Electrical Insulation Properties

The electrical conductivity of the insulating filler used in the Example was measured in accordance with ASTM D257. The test conditions were set to 1,000 V for 1 minute, and the average value was calculated based on five measurements. The results are shown in Table 4 below.

Table 4

| Surface Resistivity (Ω per square) | Volume Resistivity (Ω·m) |
|---|---|
| $5.1\times10^{12}$ | $1.02\times10^{10}$ |

**Evaluation Example 2: Evaluation of Battery Assembly Performance**

FIG. 11 is a graph showing the voltage drop over time of the battery modules in the embodiment and comparative example under simulated thermal runaway conditions.

The battery modules of the Example and the Comparative Example were inserted into a test jig, and the heating pads attached to the respective first battery cells were heated to simulate a thermal runaway situation. FIG. 11 illustrates a graph showing the voltage drop over time after simulating the thermal runaway.

Referring to FIG. 11, it was confirmed that the battery module of the Example exhibited approximately twice the thermal runaway delay time compared to the battery module of the Comparative Example during the simulated thermal runaway situation. This is considered to result from the fact that the battery assembly according to an embodiment of the present disclosure includes an insulating filler having the physical properties described herein, thereby filling empty spaces in the battery assembly and thermally and electrically insulating them during a thermal runaway event. In particular, since the insulating filler has hydrophobicity, it is believed that it can prevent electrical insulation breakdown caused by moisture absorption under thermal runaway conditions or during normal use.

## Claims

**1.** A battery assembly comprising:

a plurality of battery cells;
a receiving case configured to accommodate the plurality of battery cells;
an insertion space formed inside the receiving case; and
an insulating filler disposed in the insertion space;
wherein the insulating filler has hydrophobicity.

**2.** The battery assembly according to claim 1, wherein the insulating filler has an octanol-water partition coefficient ($LogP_{ow}$) greater than 0.

**3.** The battery assembly according to claim 1 or 2, wherein the water contact angle of the insulating filler is greater than 60°.

**4.** The battery assembly according to any one of claims 1 to 3, wherein the surface energy of the insulating filler is 72 mN/m or less, preferably, 30 mN/m or less.

**5.** The battery assembly according to any one of claims 1 to **4,** wherein the insulating filler has a water absorption of 2% or less.

**6.** The battery assembly according to any one of claims 1 to 5, wherein the insulating filler has thermal conductivity of 0.1 W/m·K or less.

7. The battery assembly according to any one of claims 1 to 6, wherein the insulating filler has a volume resistivity of 2000 Ω·m or more.

8. The battery assembly according to any one of claims 1 to 7, wherein the insulating filler comprises:

a polymer selected from the group consisting of a polysiloxane-based polymer, a polyethylene-based polymer, a polypropylene-based polymer, a polytetrafluoroethylene-based polymer, and a polystyrene-based polymer; or a copolymer comprising two or more of the polymers selected from the group, preferably, the insulating filler is in the form of a foam.

9. The battery assembly according to any one of claims 1 to 8, further comprising a busbar assembly including a busbar electrically connected to the plurality of battery cells and a busbar frame supporting the busbar,
wherein the insertion space is located in at least one of a space between the plurality of battery cells and the busbar assembly; and a space between the receiving case and the busbar assembly.

10. The battery assembly according to claim 9, wherein each of the plurality of battery cells includes an electrode assembly; a cell case accommodating the electrode assembly therein; and a lead tab portion electrically connected to the electrode assembly and protruding outward from the cell case,

wherein the busbar assembly includes a pair of side portions extending along a stacking direction of the plurality of battery cells; and a base portion connecting the pair of side portions,
wherein the insertion space is located in at least one of a space between the plurality of battery cells and the pair of side portions; a space between the plurality of battery cells and the base portion; and a space between the receiving case and the pair of side portions.

11. The battery assembly according to claim 9 or 10, wherein the insertion space includes (a) a first insertion space formed between the plurality of battery cells and the pair of side portions, and/or (b) a second insertion space formed between the receiving case and the pair of side portions, and/or (c) a third insertion space formed between the plurality of battery cells and the base portion.

12. The battery assembly according to any one of claims 1 to 11, wherein the insulating filler is provided in a foam-filled form in the insertion space to fill at least part of the total volume of the insertion space, preferably, the insulating filler fills 90% or more of the total volume of the insertion space.

13. The battery assembly according to claim 12, wherein the insulating filler is injected in the form of a liquid precursor into the insertion space and foamed in the insertion space during or after injection.

14. The battery assembly according to any one of claims 1 to 13, wherein the insulating filler is provided in a preformed foam form and is inserted into the insertion space to fill the insertion space.

15. A battery assembly comprising:

a receiving case configured to accommodate a plurality of battery cells;
the plurality of battery cells disposed within the receiving case;
a busbar assembly including a busbar electrically connected to the plurality of battery cells;
an insulating filler disposed within the receiving case between the plurality of battery cells, the receiving case and the busbar,
wherein the insulating filler is a polysiloxane-based polymer, a polyethylene-based polymer, a polypropylene-based polymer, a polytetrafluoroethylene-based polymer, a polystyrene-based polymer; or any combination thereof.

FIG. 1

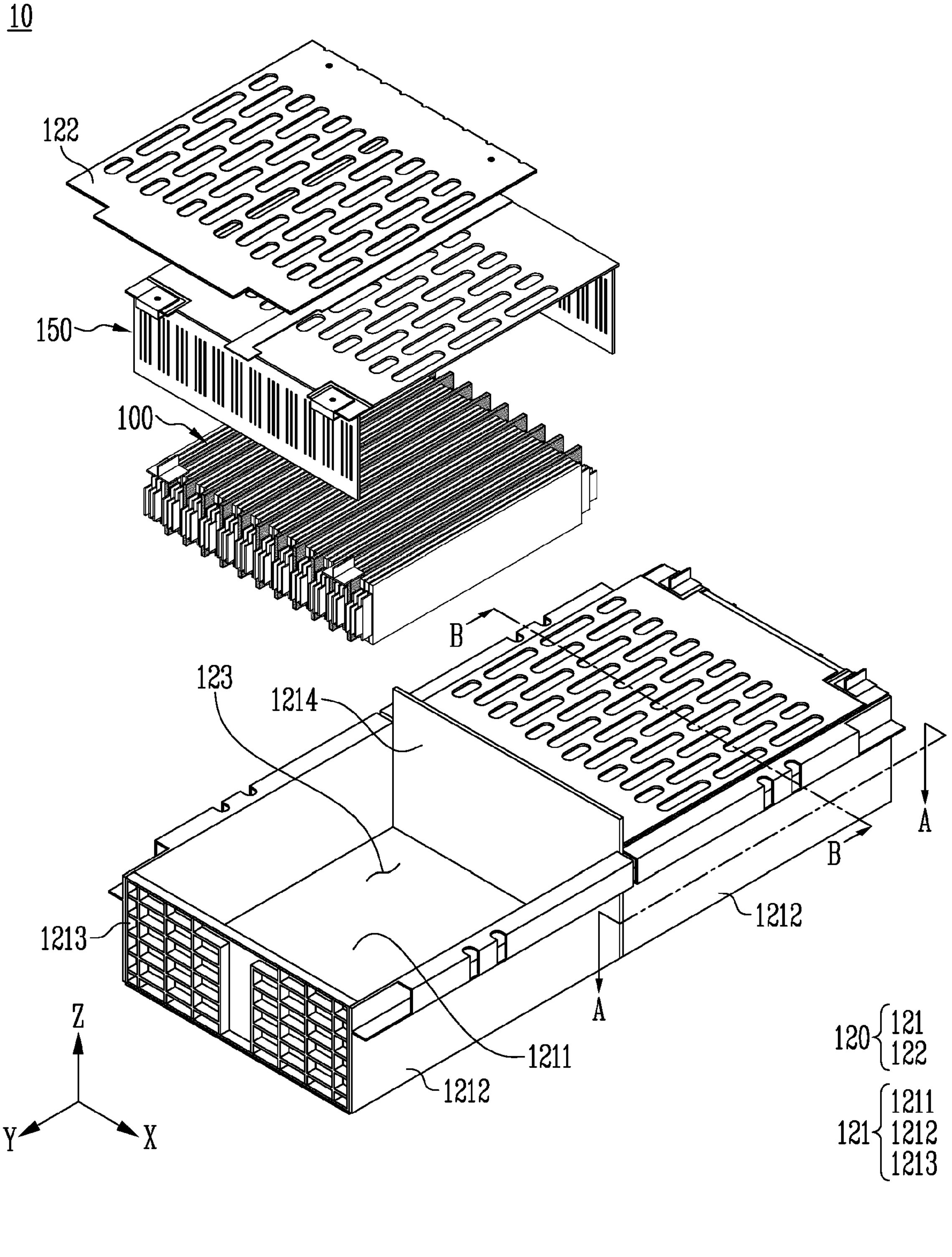
10
122
150
100
B
123
1214
B
A
1212
1213
A
1211
1212
Z
Y
X
120 { 121
122
121 { 1211
1212
1213

FIG. 2

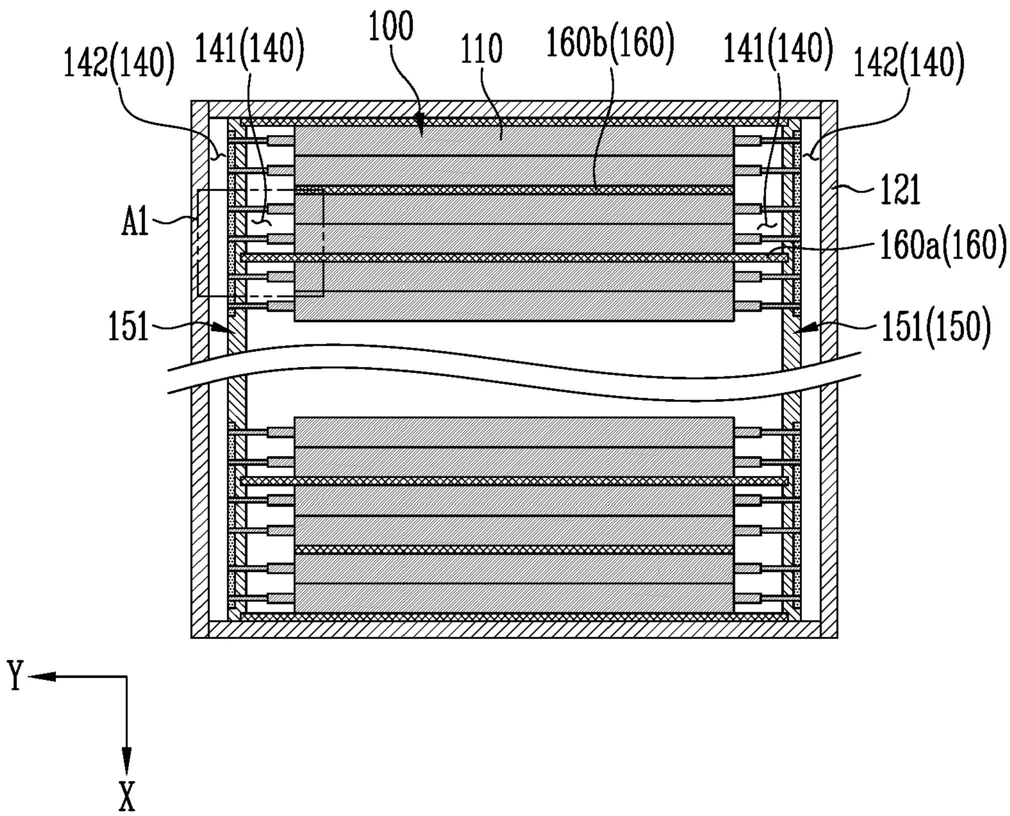
142(140)
141(140)
100
110
160b(160)
141(140)
142(140)
121
A1
160a(160)
151
151(150)
Y
X

FIG. 3

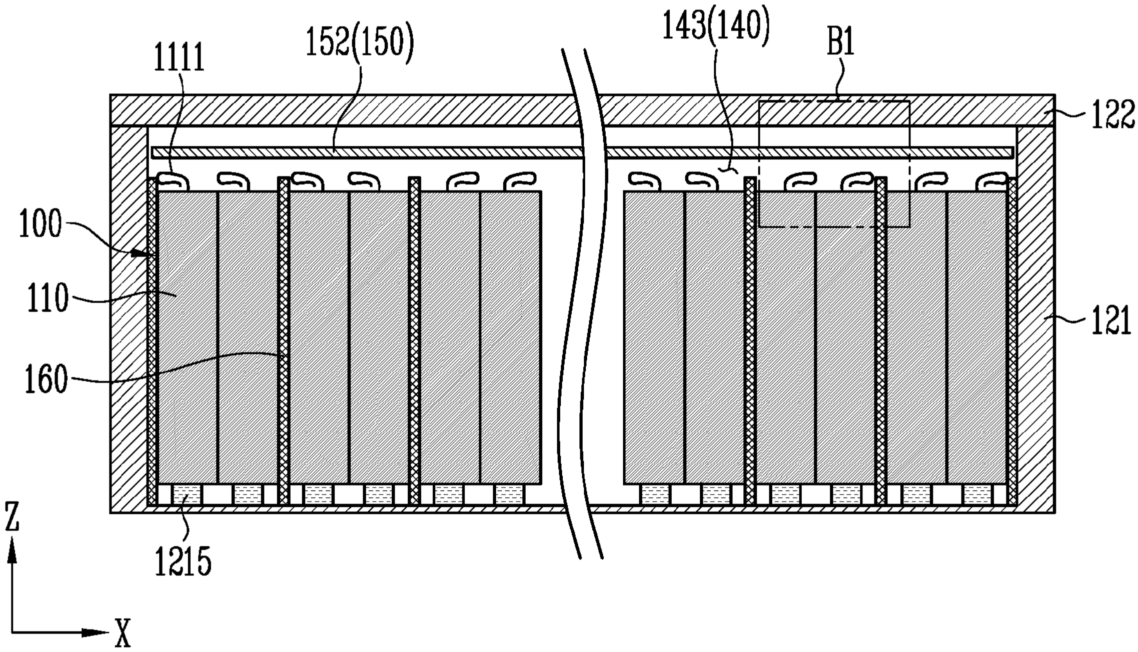

FIG. 4

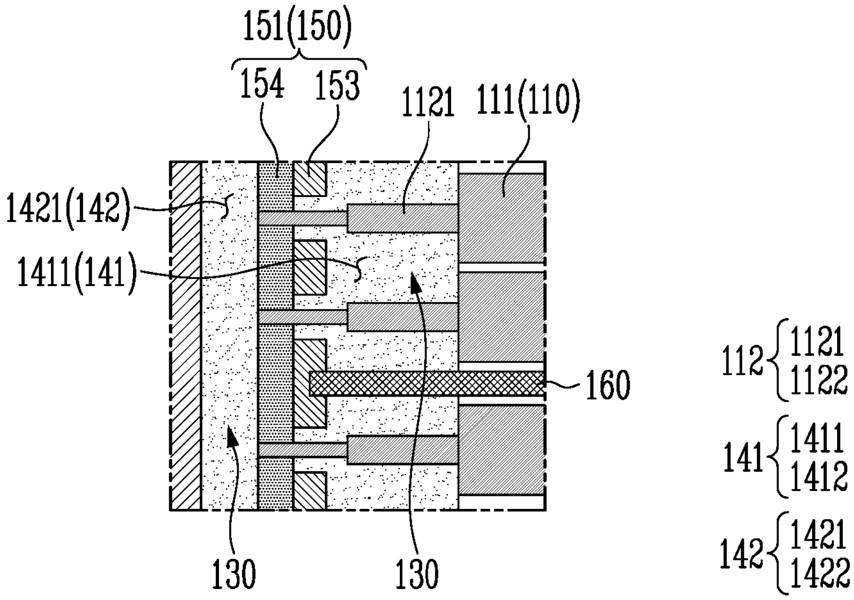
151(150)
154
153
1121
111(110)
1421(142)
1411(141)
160
130
130
112 {1121 1122
141 {1411 1412
142 {1421 1422

FIG. 5

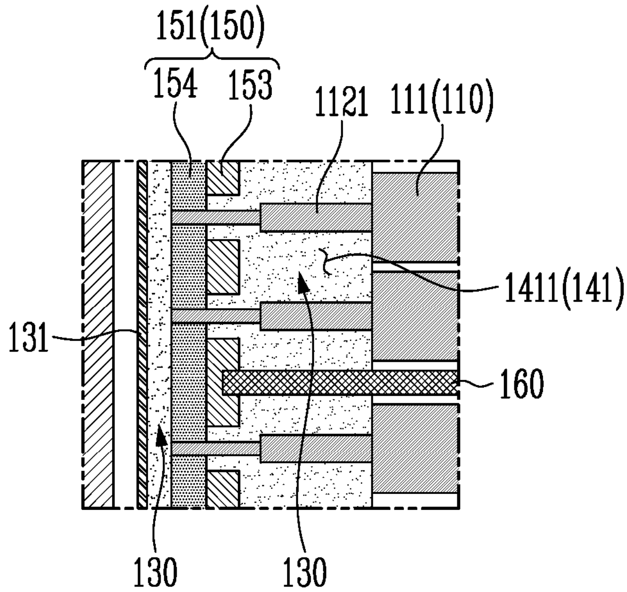

FIG. 6

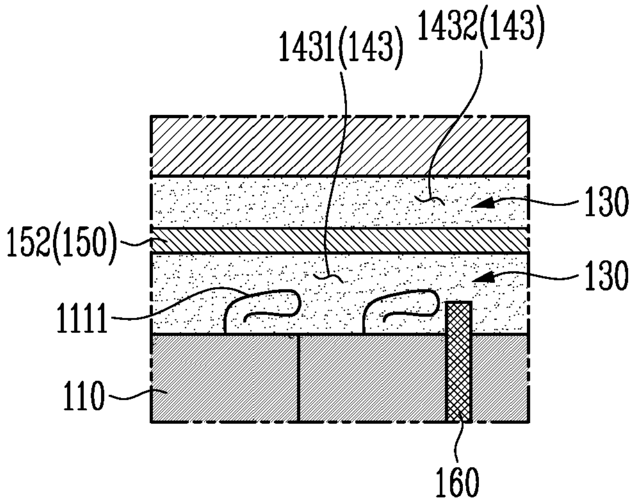

FIG. 7

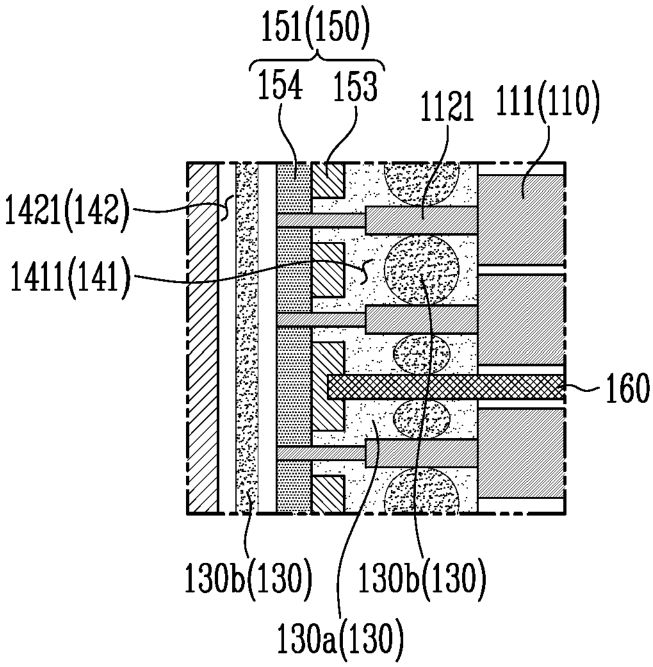
151(150)
154
153
1121
111(110)
1421(142)
1411(141)
160
130b(130)
130b(130)
130a(130)

FIG. 8

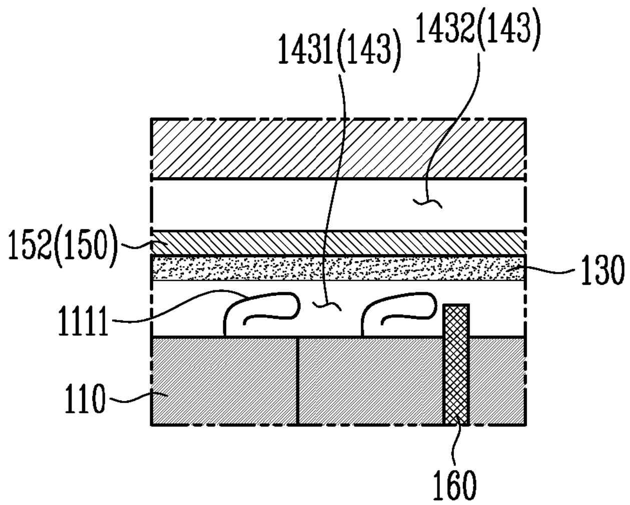

FIG. 9

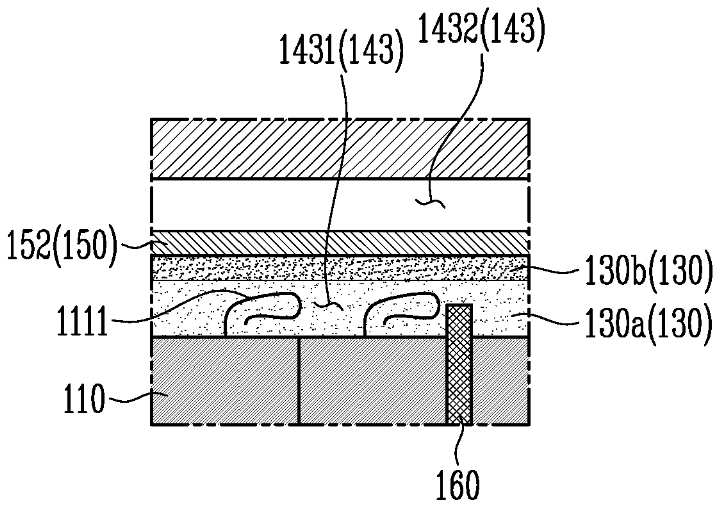

FIG. 10

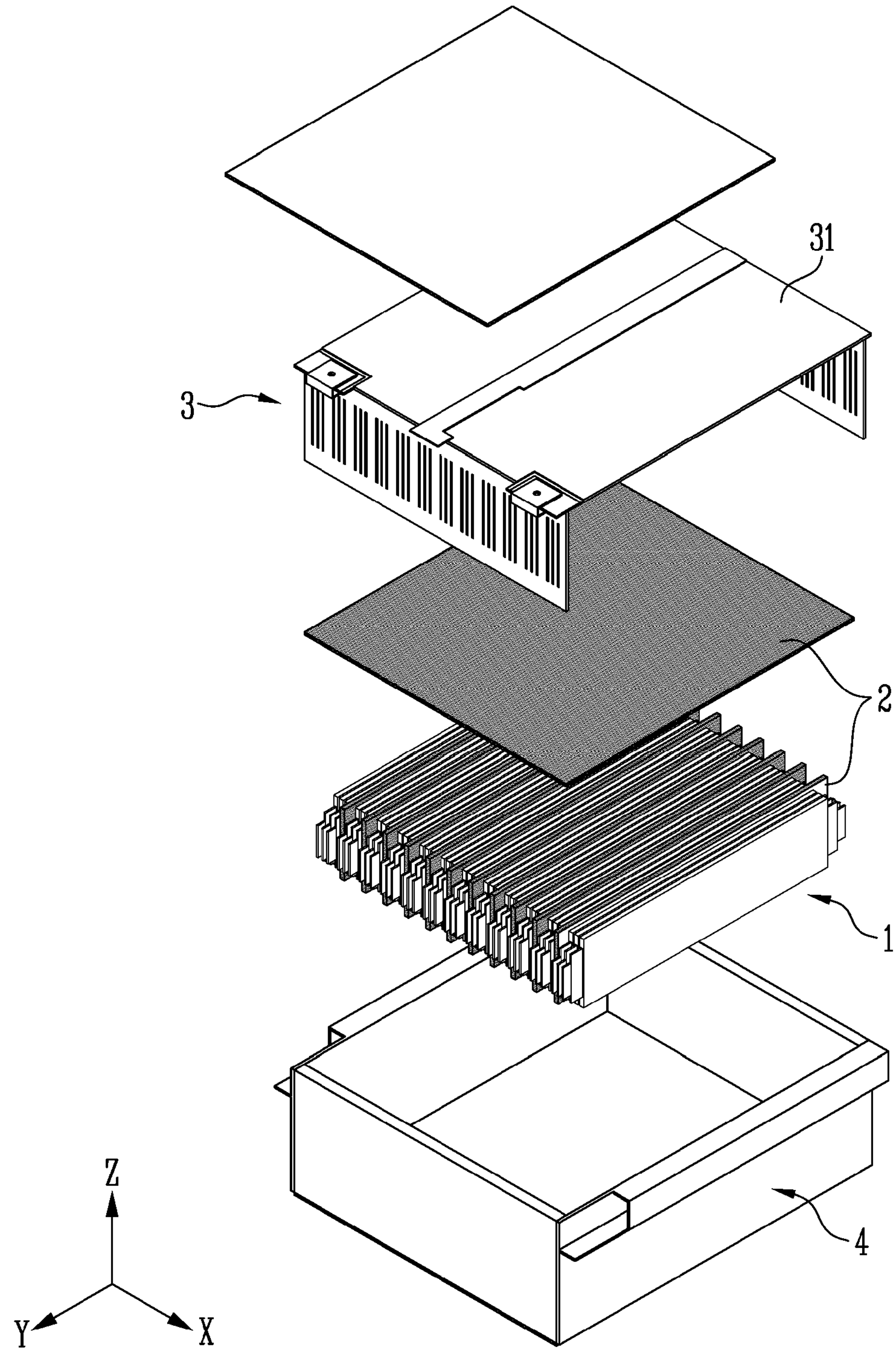

FIG. 11

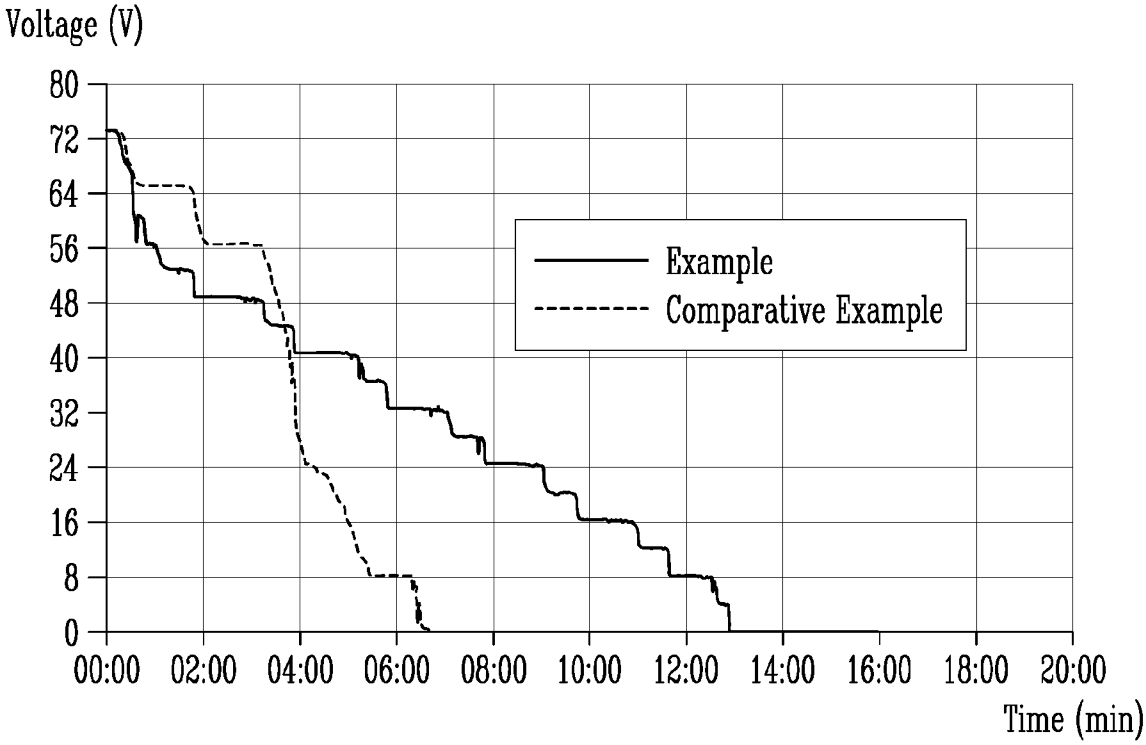
Voltage (V)
80
72
64
56
48
40
32
24
16
8
0
00:00
02:00
04:00
06:00
08:00
10:00
12:00
14:00
16:00
18:00
20:00
Time (min)
Example
Comparative Example